# EUROPÄISCHE PATENTSCHRIFT

(11) **EP 3 277 001 B1**
(45) Veröffentlichungstag und Bekanntmachung des Hinweises auf die Patenterteilung: **23.01.2019**
(21) Anmeldenummer: 16182112.9
(22) Anmeldetag: 29.07.2016
(51) Int. Cl.: H04W 8/20, H04W 4/50, H04W 12/04, H04W 12/02

(54) **SMDP SERVER UND KOMMUNIKATIONSGERÄT MIT ESIM SCHALTKREIS**
SMDP SERVER AND COMMUNICATION DEVICE WITH ESIM CIRCUIT
SERVEUR SMDP ET APPAREIL DE COMMUNICATION COMPRENANT UN CIRCUIT ESIM

(43) Veröffentlichungstag der Anmeldung: 31.01.2018
(73) Patentinhaber: Deutsche Telekom AG, 53113 Bonn (DE)
(72) Erfinder: Sonntag, Dr. Thomas, 53343 Wachtberg (DE)
(74) Vertreter: Patentship Patentanwaltsgesellschaft mbH

(56) Entgegenhaltungen:
- EP-A1- 1 662 829
- US-A1- 2005 111 463
- US-A1- 2013 303 122
- US-A1- 2016 142 906

## Beschreibung

Die vorliegende Erfindung betrifft einen SMDP (Subscription Manager Data Preparation bzw. Einschreibeverwaltungs- und Datenvorbereitungs-) Server zum Erzeugen eines Profils eines Benutzers einer elektronischen SIM (eSIM) und ein Kommunikationsgerät mit eSIM-Schaltkreis und Kommunikationsschnittstelle zum Empfangen des Profils des Benutzers.

Die effiziente Vergabe von PINs (persönlichen Identifikationsnummern) bei eSIM (elektronische oder eingebettete SIM bzw. Teilnehmeridentitätsmodul) ist ein bisher ungelöstes Problem. Aus Gründen der Praktikabilität werden die eSIMs durch mehrere Netzbetreiber daher mit der PIN "0000" und/oder deaktivierter PIN ausgeliefert.

Ein Problem besteht darin, eine neue PIN zu wählen, welche einem Profil bekannt ist.

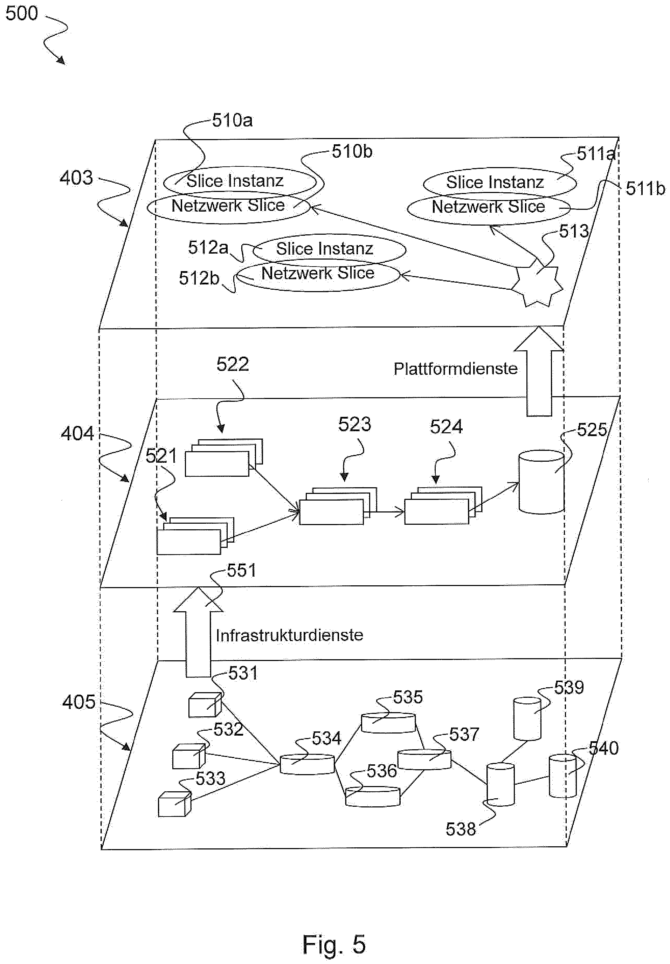

Die Druckschrift US 2013 / 303122 A1 betrifft ein eSIM Modul in einem mobilen Terminal (UE) mit personalisierter Nutzerinformation. In der dort dargestellten Figur 5 wird ein Ablaufdiagramm gezeigt, welches einen beispielhaften Prozess zum Personalisieren einer eSIM darstellt.

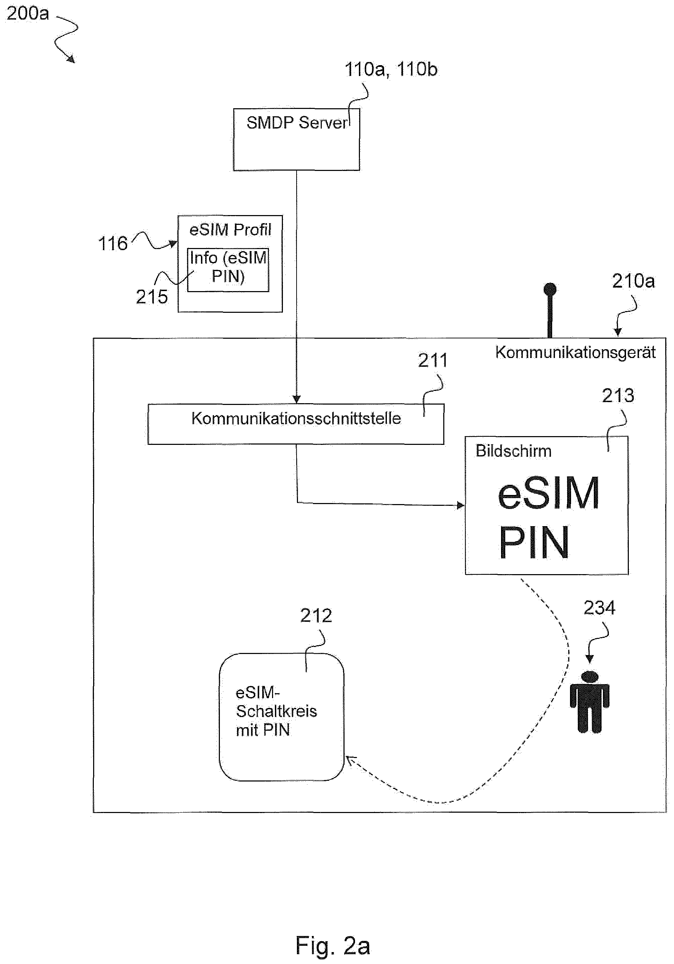

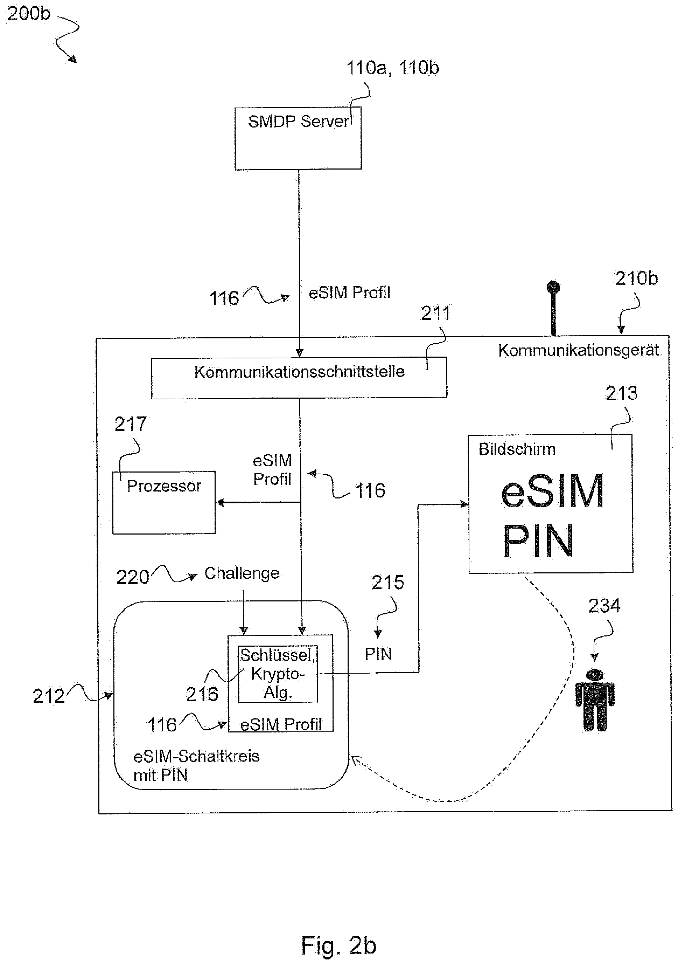

Die Druckschrift US 2016 /142 906 A1 betrifft ein mobiles Kommunikationsnetz, in dem ein mobiles Gerät (UE) mit einer eUICC (embedded Universal Integrated Circuit Card) sich aus dem Kommunikationsnetz ein SIM Modul herunterladen und auswählen kann. Die eUICC kann sich z.B. ein Profil von einem Profilserver herunterladen, wie dort in Fig. 2 dargestellt.

Es ist die Aufgabe der vorliegenden Erfindung, ein Konzept zu schaffen, um ein Nutzerprofil mit Informationen über eine PIN auf effiziente Weise auf ein Kommunikationsgerät mit elektronischer SIM zu übertragen.

Insbesondere ist es eine Aufgabe der vorliegenden Erfindung ein Konzept zur effizienten Nutzung eines solchen Kommunikationsgeräts in 5G-Netzwerken zu schaffen.

Diese Aufgabe wird durch die Merkmale der unabhängigen Ansprüche gelöst. Vorteilhafte Weiterbildungsformen sind Gegenstand der abhängigen Ansprüche.

Eine Grundidee der Erfindung liegt darin, vor dem Profildownload die PIN durch den SMDP-Server erzeugen und in das Profil schreiben zu lassen. Profile und PIN werden dann an das eUICC ("electronic oder embedded Universal Integrated Circuit Card" bzw. elektronische oder eingebettete universelle integrierte Schaltkreiskarte) übermittelt. Alternativ kann die PIN nach dem Download vom eUICC in das Profil geschrieben werden. Die Übertragung der PIN vom SMDP Server an das Gerät ist grundsätzlich sicher, da der Download verschlüsselt ist. Dennoch kann man die Übertragung der PIN vermeiden und zwar durch ein Challenge-Response Verfahren analog zur GSM Netzwerk-Authentisierung. Für jedes Profil erzeugt der SMDP (bei der Profilerzeugung oder beim Download) einen (Random) Schlüssel und eine (Random) Challenge. Der Schlüssel wird in das Profil geschrieben. Die API des Profils lässt ein Auslesen des Schlüssels nicht zu. Aus dem Schlüssel und der Challenge berechnet der SMDP Server mit einem bestimmten Algorithmus die PIN. Der Algorithmus ist ebenfalls auf dem Profil implementiert. Beim Download werden das Profile und die Challenge an die eUICC geschickt. Nachdem Download schickt die eUICC die Challenge an das Profil. Das Profil berechnet dann mit dem enthaltenen Algorithmus aus dem Schlüssel und der Challenge die PIN und gibt die PIN an eUICC weiter.

Es sei angemerkt, dass die PIN eine Eigenschaft einer SIM bzw. eines Profiles ist. D.h. die eUICC hat und braucht keine PIN. Das Problem besteht grundsätzlich darin, eine PIN zu erzeugen und die SIM dem User bekannt zu machen, d.h. Erzeugung und Bekanntmachung zu synchronisieren. Das hier beschriebene Verfahren basiert auf der Synchronisierung durch den SMDP Server. Dieser erzeugt die PIN, schreibt die PIN in das Profil und übermittelt die PIN via eUICC an das Gerät, das die PIN, z.B. beim Download, dem Nutzer anzeigen kann.

Die im Folgenden vorgestellten Vorrichtungen, Verfahren und Systeme können von verschiedener Art sein. Die einzelnen beschriebenen Elemente können durch Hardware- oder Softwarekomponenten realisiert sein, beispielsweise elektronische Komponenten, die durch verschiedene Technologien hergestellt werden können und zum Beispiel Halbleiterchips, ASICs, Mikroprozessoren, digitale Signalprozessoren, integrierte elektrische Schaltungen, elektrooptische Schaltungen und/oder passive Bauelemente umfassen.

Die im Folgenden vorgestellten Geräte, Systeme und Verfahren sind dafür geeignet, Informationen über ein Kommunikationsnetzwerk zu übertragen. Der Begriff Kommunikationsnetzwerk oder Kommunikationsnetz bezeichnet dabei die technische Infrastruktur, auf der die Übertragung von Signalen stattfindet. Das Kommunikationsnetz umfasst im Wesentlichen das Vermittlungsnetz, in dem die Übertragung und Vermittlung der Signale zwischen den ortsfesten Einrichtungen und Plattformen des Mobilfunknetzes oder Festnetzes stattfinden, sowie das Zugangsnetz, in dem die Übertragung der Signale zwischen einer Netzwerkzugangseinrichtung und dem Kommunikationsendgerät stattfindet. Das Kommunikationsnetz kann hierbei sowohl Komponenten eines Mobilfunknetzes als auch Komponenten eines Festnetzes umfassen. Im Mobilfunknetz wird das Zugangsnetz auch als Luftschnittstelle bezeichnet und umfasst beispielsweise eine Basisstation (NodeB, eNodeB, Funkzelle) mit Mobilfunkantenne, um die Kommunikation zu einem Kommunikationsendgerät wie beispielsweise einem Mobiltelefon bzw. Smartphone oder einer mobilen Einrichtung mit Mobilfunkadapter aufzubauen. Im Festnetz umfasst das Zugangsnetz beispielsweise einen DSLAM (digital subscriber line access multiplexer), um die Kommunikationsendgeräte mehrerer Teilnehmer draht- bzw. kabelgebunden anzuschließen. Über das Vermittlungsnetz kann die Kommunikation in weitere Netze, beispielsweise anderer Netzbetreiber, z.B. Auslandsnetze, weitervermittelt werden.

Die im Folgenden vorgestellten Geräte, Systeme und Verfahren sind dazu vorgesehen, die Kommunikation in Kommunikationsnetzen zu steigern, insbesondere in Kommunikationsnetzen gemäß der im Folgenden vorgestellten 5G Systemarchitektur.

Gemäß einem ersten Aspekt betrifft die Erfindung einen SMDP-Server, mit: einem Profilgenerator zum Erzeugen eines Profils eines Benutzers einer elektronischen SIM (eSIM); einem PIN-Generator zum Erzeugen einer persönlichen Identifikationsnummer (PIN) der elektronischen SIM; und einer Kommunikationsschnittstelle zum Übermitteln des Profils mit Informationen über die PIN an einen eSIM-Schaltkreis eines Kommunikationsgeräts.

Ein solcher SMDP Server mit Profilgenerator und PIN-Generator ermöglicht es dem Nutzer, sich auf einfache Weise ein Profil mit Informationen über eine PIN für seine eSIM zu beschaffen.

Gemäß einer Ausführungsform des SMDP Servers umfasst das Profil des Benutzers eine Datenstruktur mit Daten und Anwendungsprogrammen, die dem Benutzer auf der eSIM bereitgestellt werden, und einen Zugriff auf eine spezifische Netzwerkinfrastruktur ermöglichen.

Dies bietet den Vorteil, dass mit dem so erhaltenen Profil unterschiedlichste Anwendungsprogramme genutzt werden können, um auf verschiedene Dienste des Netzwerks zugreifen zu können oder um gewisse Netzwerkfunktionalitäten freischalten zu können. Dies gestattet eine erhöhte Flexibilität und Anwenderfreundlichkeit.

Gemäß einer Ausführungsform umfasst der SMDP Server eine Netzwerkschnittstelle zum Empfangen von profilbeschreibenden Daten von einem mobilen Kommunikationsnetzwerk, bei dem der Benutzer registriert ist, wobei der Profilgenerator ausgebildet ist, basierend auf den profilbeschreibenden Daten das Profil des Benutzers zu erzeugen.

Dies bietet den Vorteil, dass ein nicht-personalisiertes Profil für eine Mehrzahl von Nutzern, welche die gleiche Profilbeschreibung nutzen auf einfache und effiziente Weise erzeugt werden kann.

Gemäß einer Ausführungsform des SMDP Servers ist die Netzwerkschnittstelle ferner ausgebildet, persönliche Daten des Benutzers zu empfangen, und der PIN-Generator ist ausgebildet, die PIN der elektronischen SIM basierend auf den empfangenen persönlichen Daten des Benutzers zu erzeugen.

Dies bietet den Vorteil, dass auf effiziente Weise für jeden Nutzer eine nutzerspezifische PIN erzeugt werden kann, die aufgrund der Beziehung zu den persönlichen Daten bei jedem Nutzer unterschiedlich erzeugt wird. Damit bietet die so erzeugte PIN ein hohes Maß an Sicherheit.

Gemäß einer Ausführungsform des SMDP Servers ist die Kommunikationsschnittstelle ausgebildet, die von dem PIN-Generator erzeugte PIN verschlüsselt an den eSIM-Schaltkreis des Kommunikationsgeräts zu übertragen.

Dies bietet den Vorteil, dass die PIN aufgrund der Verschlüsselung sehr sicher gegen Abhören an die eSIM des Nutzers übertragen werden kann.

Gemäß einer Ausführungsform des SMDP Servers ist Profilgenerator ausgebildet, die von dem PIN-Generator erzeugte PIN vor dem Übertragen des Profils an den eSIM-Schaltkreis des Kommunikationsgeräts in das Profil zu schreiben.

Dies bietet den Vorteil, dass die PIN, die sich im Profil befindet, dort sicher aufbewahrt werden kann und beim Übertragen nicht einfach ausgelesen werden kann. Wenn die PIN sich im Profil befindet, braucht sie auch nicht direkt übertragen werden, was die Sicherheit erhöht.

Gemäß einer Ausführungsform des SMDP Servers ist der eSIM-Schaltkreis des Kommunikationsgeräts ausgebildet, die über die Kommunikationsschnittstelle übertragene PIN in das Profil zu schreiben.

Dies erhöht die Sicherheit gegen Ausspähen der PIN. So muss die PIN nur einmal zum eSIM-Schaltkreis übertragen werden, während die Profile unter Umständen mehrmals übertragen werden, beispielsweise bei einem Update oder Upgrade Prozess.

Gemäß einer Ausführungsform des SMDP Servers ist der PIN-Generator ausgebildet, einen Schlüssel und eine Challenge gemäß einem Challenge-Response Verfahren zu erzeugen, so dass die PIN über einen kryptographischen Algorithmus aus dem Schlüssel und der Challenge bestimmbar ist; und der Profilgenerator ist ausgebildet, den Schlüssel und den kryptographischen Algorithmus in das Profil zu schreiben.

Dies erhöht die Sicherheit gegen Ausspähen der PIN. Wenn diese erst gar nicht übertragen wird, kann sie auch nicht ausgespäht oder abgegriffen werden. Ein Angreifer müsste im Besitz sowohl des Schlüssels als auch der Challenge und des kryptographischen Algorithmus sein, um die PIN damit erzeugen zu können.

Gemäß einer Ausführungsform des SMDP Servers umfasst das Profil ein Anwendungsprogramm, das ein Auslesen des Schlüssels nicht zulässt.

Dies erhöht die Sicherheit gegen missbräuchliches Abgreifen des Schlüssels, da ein Auslesen des Schlüssels aus dem Profil nicht möglich ist.

Gemäß einer Ausführungsform des SMDP Servers ist das Anwendungsprogramm des Profils ausgebildet, ansprechend auf einen Empfang der Challenge unter Verwendung des kryptographischen Algorithmus aus dem Schlüssel die PIN zu bestimmen.

Dies bietet den Vorteil, dass die PIN nicht direkt übertragen wird und damit auch nicht abgehört werden kann. Allerdings kann das Anwendungsprogramm die PIN auf einfach Art und Weise aus der Challenge, dem Schlüssel und dem kryptographischen Algorithmus bestimmen.

Gemäß einem zweiten Aspekt betrifft die Erfindung ein Kommunikationsgerät, mit: einem eSIM-Schaltkreis zum Bereitstellen einer elektronischen SIM (eSIM); einer Kommunikationsschnittstelle zum Empfangen eines Profils eines Benutzers der eSIM mit Informationen über eine persönliche Identifikationsnummer (PIN) der elektronischen SIM; und einem Bildschirm zum Anzeigen der PIN.

Mit einem solchen Kommunikationsgerät kann das Nutzerprofil mit Informationen über die PIN auf effiziente Weise auf das Kommunikationsgerät mit elektronischer SIM übertragen werden und dem Benutzer auf sichere Weise zugänglich gemacht werden, denn die Anzeige am Bildschirm seines Kommunikationsgeräts ist nur ihm ersichtlich.

Gemäß einer Ausführungsform des Kommunikationsgeräts umfasst das Profil des Benutzers eine Datenstruktur mit Daten und Anwendungsprogrammen, die dem Benutzer auf der eSIM bereitgestellt werden, und einen Zugriff auf eine spezifische Netzwerkinfrastruktur ermöglichen.

Dies bietet den Vorteil, dass mit dem so erhaltenen Profil unterschiedlichste Anwendungsprogramme genutzt werden können, um auf verschiedene Dienste des Netzwerks zugreifen zu können oder um gewisse Netzwerkfunktionalitäten freischalten zu können. Dies gestattet eine erhöhte Flexibilität und Anwenderfreundlichkeit.

Gemäß einer Ausführungsform des Kommunikationsgeräts ist die Kommunikationsschnittstelle ausgebildet, die PIN in verschlüsselter Form zu empfangen; und der eSIM-Schaltkreis ist ausgebildet, die empfangene PIN zu entschlüsseln und in das Profil zu schreiben.

Dies bietet den Vorteil, dass die PIN aufgrund der Verschlüsselung sehr sicher gegen Abhören an die Kommunikationsschnittstelle des Kommunikationsgeräts übertragen werden kann. Die Entschlüsselung der PIN durch den eSIM-Schaltkreis erhöht die Sicherheit gegen Ausspähen der PIN. So muss die PIN nur einmal zum eSIM-Schaltkreis übertragen werden, während die Profile unter Umständen mehrmals übertragen werden, beispielsweise bei einem Update oder Upgrade Prozess.

Gemäß einer Ausführungsform des Kommunikationsgeräts ist die PIN über einen kryptographischen Algorithmus aus dem Schlüssel und der Challenge bestimmbar; und das Profil umfasst den Schlüssel und den kryptographischen Algorithmus.

Dies bietet den Vorteil, dass die PIN nicht direkt übertragen wird und damit auch nicht abgehört werden kann. Das Anwendungsprogramm kann die PIN auf einfache Art und Weise aus der Challenge, dem Schlüssel und dem kryptographischen Algorithmus bestimmen.

Gemäß einer Ausführungsform des Kommunikationsgeräts umfasst das Profil ein Anwendungsprogramm, das ein Auslesen des Schlüssels nicht zulässt; und das Anwendungsprogramm des Profils ist ausgebildet, ansprechend auf einen Empfang einer Challenge unter Verwendung des kryptographischen Algorithmus aus dem Schlüssel die PIN zu bestimmen.

Dies erhöht die Sicherheit gegen missbräuchliches Abgreifen des Schlüssels, da ein Auslesen des Schlüssels aus dem Profil nicht möglich ist.

Gemäß einer Ausführungsform umfasst das Kommunikationsgerät einen Prozessor, der ausgebildet ist, basierend auf dem empfangenen Profil des Benutzers einen Kommunikationskanal über ein Netzwerk einer fünften Generation (5G) oder einer weiteren Generation aufzubauen, einen Slice des Netzwerks der fünften oder weiteren Generation zu konfigurieren und/oder eine Anwendung des Netzwerks der fünften oder weiteren Generation freizuschalten.

Dies bietet den Vorteil, dass über das empfangene Profil der Nutzer berechtigt ist, in 5G Netzwerken zu kommunizieren, Subnetzwerke bzw. Slices in 5G Netzwerken zu konfigurieren sowie Anwendungen, Dienste und Ressourcen in 5G Netzwerken freizuschalten. Der Nutzer kann sich damit sein eigenes Netzwerk aufbauen und konfigurieren sowie Anwendungen, Dienste und Ressourcen in seinem Netzwerk freischalten.

Weitere Ausführungsbeispiele werden Bezug nehmend auf die beiliegenden Zeichnungen erläutert. Es zeigen:
Fig. 1a eine schematische Darstellung eines Kommunikationssystems 100a mit SMDP Server 110 und Kommunikationsgerät 210a, 210b mit eSIM-Schaltkreis 212 gemäß einer beispielhaften ersten Ausführungsform;
Fig. 1b eine schematische Darstellung eines Kommunikationssystems 100b mit SMDP Server 110 und Kommunikationsgerät 210a, 210b mit eSIM-Schaltkreis 212 gemäß einer beispielhaften zweiten Ausführungsform;
Fig. 2a eine schematische Darstellung eines Kommunikationsgeräts 210a mit eSIM-Schaltkreis 212 gemäß einer beispielhaften ersten Ausführungsform;
Fig. 2b eine schematische Darstellung eines Kommunikationsgeräts 210b mit eSIM-Schaltkreis 212 gemäß einer beispielhaften zweiten Ausführungsform;
Fig. 3 eine schematische Darstellung eines Kommunikationssystems 300 mit eUICC 330 und SMDP Server 320 zum Bereitstellen eines personalisierten Profils 326 gemäß einer beispielhaften Ausführungsform;
Fig. 4 eine schematische Darstellung einer 5G Systemarchitektur 400;
Fig. 5 eine schematische Darstellung eines 5G-Kommunikationsnetzwerks mit mehreren Slices (Netzwerkscheiben) 500;
Fig. 6 eine schematische Darstellung eines 5G-Kommunikationsnetzwerkes 600 mit Kommunikationskanal 615 zur Kommunikation zwischen zwei mobilen Kommunikationsgeräten gemäß einer beispielhaften Ausführungsform; und
Fig. 7 eine schematische Darstellung eines Verfahrens 700 zum Übermitteln eines Profils von einem SMDP Server an eines eSIM-Schaltkreis eines Kommunikationsgeräts, gemäß einer beispielhaften Ausführungsform,

In der folgenden ausführlichen Beschreibung wird auf die beiliegenden Zeichnungen Bezug genommen, die einen Teil hiervon bilden und in denen als Veranschaulichung spezifische Ausführungsformen gezeigt sind, in denen die Erfindung ausgeführt werden kann. Es versteht sich, dass auch andere Ausführungsformen genutzt und strukturelle oder logische Änderungen vorgenommen werden können, ohne von dem Konzept der vorliegenden Erfindung abzuweichen. Die folgende ausführliche Beschreibung ist deshalb nicht in einem beschränkenden Sinne zu verstehen. Ferner versteht es sich, dass die Merkmale der verschiedenen hierin beschriebenen Ausführungsbeispiele miteinander kombiniert werden können, sofern nicht spezifisch etwas anderes angegeben ist.

Die Aspekte und Ausführungsformen werden unter Bezugnahme auf die Zeichnungen beschrieben, wobei gleiche Bezugszeichen sich im Allgemeinen auf gleiche Elemente beziehen. In der folgenden Beschreibung werden zu Erläuterungszwecken zahlreiche spezifische Details dargelegt, um ein eingehendes Verständnis von einem oder mehreren Aspekten der Erfindung zu vermitteln. Für einen Fachmann kann es jedoch offensichtlich sein, dass ein oder mehrere Aspekte oder Ausführungsformen mit einem geringeren Grad der spezifischen Details ausgeführt werden können. In anderen Fällen werden bekannte Strukturen und Elemente in schematischer Form dargestellt, um das Beschreiben von einem oder mehreren Aspekten oder Ausführungsformen zu erleichtern. Es versteht sich, dass andere Ausführungsformen genutzt und strukturelle oder logische Änderungen vorgenommen werden können, ohne von dem Konzept der vorliegenden Erfindung abzuweichen.

Wenngleich ein bestimmtes Merkmal oder ein bestimmter Aspekt einer Ausführungsform bezüglich nur einer von mehreren Implementierungen offenbart worden sein mag, kann außerdem ein derartiges Merkmal oder ein derartiger Aspekt mit einem oder mehreren anderen Merkmalen oder Aspekten der anderen Implementierungen kombiniert werden, wie für eine gegebene oder bestimmte Anwendung erwünscht und vorteilhaft sein kann. Weiterhin sollen in dem Ausmaß, in dem die Ausdrücke "enthalten", "haben", "mit" oder andere Varianten davon entweder in der ausführlichen Beschreibung oder den Ansprüchen verwendet werden, solche Ausdrücke auf eine Weise ähnlich dem Ausdruck "umfassen" einschließend sein. Die Ausdrücke "gekoppelt" und "verbunden" können zusammen mit Ableitungen davon verwendet worden sein. Es versteht sich, dass derartige Ausdrücke dazu verwendet werden, um anzugeben, dass zwei Elemente unabhängig davon miteinander kooperieren oder interagieren, ob sie in direktem physischem oder elektrischem Kontakt stehen oder nicht in direktem Kontakt miteinander stehen. Außerdem ist der Ausdruck "beispielhaft" lediglich als ein Beispiel aufzufassen anstatt der Bezeichnung für das Beste oder Optimale. Die folgende Beschreibung ist deshalb nicht in einem einschränkenden Sinne zu verstehen.

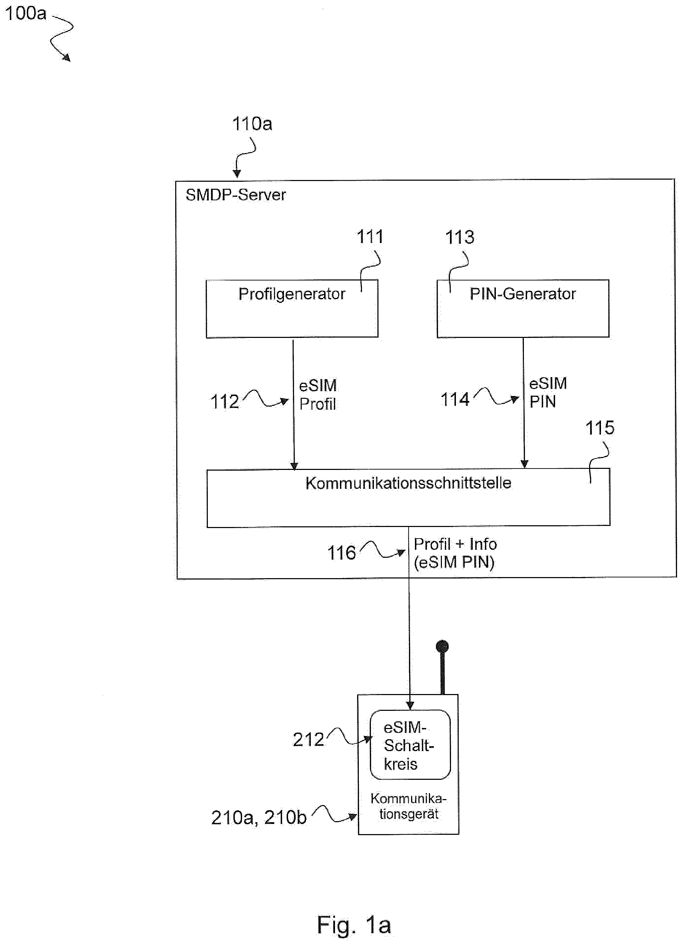

Fig. 1a zeigt eine schematische Darstellung eines Kommunikationssystems 100a mit SMDP Server 110 und Kommunikationsgerät 210a, 210b mit eSIM-Schaltkreis 212 gemäß einer beispielhaften ersten Ausführungsform. Das Kommunikationsgerät 210a, 210b kann ein solches sein wie unten zu den Figuren 2a und 2b beschrieben; ebenso der eSIM-Schaltkreis 212.

Der SMDP-Server 110a umfasst einen Profilgenerator 111, einen PIN Generator 113 und eine Kommunikationsschnittstelle 115. Der Profilgenerator 111 erzeugt ein Profil 112 eines Benutzers einer elektronischen SIM (eSIM). Der PIN-Generator 113 erzeugt eine persönliche Identifikationsnummer (PIN) 114 der elektronischen SIM. Die Kommunikationsschnittstelle 115 übermittelt das Profil zusammen mit Informationen über die PIN 116 an einen eSIM-Schaltkreis 212 eines Kommunikationsgeräts 210a, 210b.

Das Profil 112 des Benutzers umfasst eine Datenstruktur mit Daten und Anwendungsprogrammen, die dem Benutzer auf der eSIM bereitgestellt werden, und einen Zugriff auf eine spezifische Netzwerkinfrastruktur ermöglichen.

Der Profilgenerator 111 kann die von dem PIN-Generator 113 erzeugte PIN 114 vor dem Übertragen des Profils 112 an den eSIM-Schaltkreis 212 des Kommunikationsgeräts 210a, 210b in das Profil (112) schreiben. Alternativ kann auch der eSIM-Schaltkreis 212 des Kommunikationsgeräts 210a, 210b die über die Kommunikationsschnittstelle 115 übertragene PIN 114 in das Profil 112 schreiben.

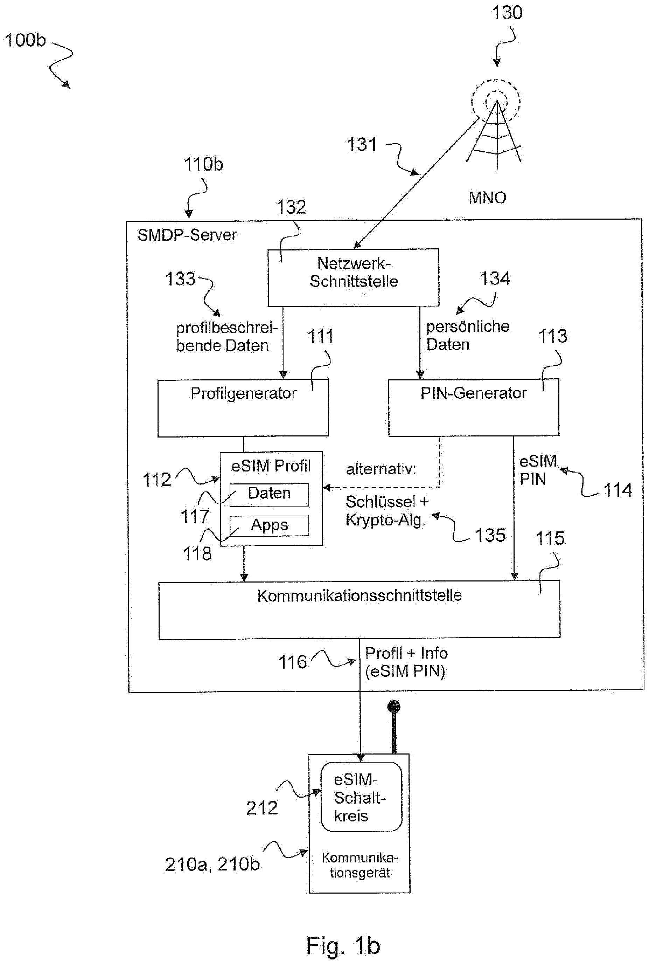

Fig. 1b zeigt eine schematische Darstellung eines Kommunikationssystems 100b mit SMDP Server 110 und Kommunikationsgerät 210a, 210b mit eSIM-Schaltkreis 212 gemäß einer beispielhaften zweiten Ausführungsform. Das Kommunikationsgerät 210a, 210b kann ein solches sein wie unten zu den Figuren 2a und 2b beschrieben; ebenso der eSIM-Schaltkreis 212.

Der SMDP-Server 110b umfasst einen Profilgenerator 111, einen PIN Generator 113 und eine Kommunikationsschnittstelle 115. Der Profilgenerator 111 erzeugt ein Profil 112 eines Benutzers einer elektronischen SIM (eSIM). Der PIN-Generator 113 erzeugt eine persönliche Identifikationsnummer (PIN) 114 der elektronischen SIM. Die Kommunikationsschnittstelle 115 übermittelt das Profil zusammen mit Informationen über die PIN 116 an einen eSIM-Schaltkreis 212 eines Kommunikationsgeräts 210a, 210b.

Das das Profil 112 des Benutzers umfasst eine Datenstruktur mit Daten und Anwendungsprogrammen, die dem Benutzer auf der eSIM bereitgestellt werden, und einen Zugriff auf eine spezifische Netzwerkinfrastruktur ermöglichen.

Der SMDP-Server 110b umfasst eine Netzwerkschnittstelle 132 zum Empfangen von profilbeschreibenden Daten 133 von einem mobilen Kommunikationsnetzwerk 130, bei dem der Benutzer registriert ist. Der Profilgenerator 111 kann das Profil 112 des Benutzers basierend auf den profilbeschreibenden Daten 133 erzeugen.

Die Netzwerkschnittstelle 132 kann auch persönliche Daten 134 des Benutzers empfangen. Der PIN-Generator 113 kann dann die PIN 114 der elektronischen SIM basierend auf den empfangenen persönlichen Daten 134 des Benutzers erzeugen.

In einer Ausführungsform überträgt die Kommunikationsschnittstelle 115 die von dem PIN-Generator 113 erzeugte PIN 114 in verschlüsselter Form an den eSIM-Schaltkreis 212 des Kommunikationsgeräts 210a, 210b.

Der Profilgenerator 111 kann die von dem PIN-Generator 113 erzeugte PIN 114 vor dem Übertragen des Profils 112 an den eSIM-Schaltkreis 212 des Kommunikationsgeräts 210a, 210b in das Profil (112) schreiben. Alternativ kann auch der eSIM-Schaltkreis 212 des Kommunikationsgeräts 210a, 210b die über die Kommunikationsschnittstelle 115 übertragene PIN 114 in das Profil 112 schreiben.

In einer Ausführungsform erzeugt der PIN-Generator 113 einen Schlüssel und eine Challenge gemäß einem Challenge-Response Verfahren, so dass die PIN 114 über einen kryptographischen Algorithmus aus dem Schlüssel und der Challenge bestimmbar ist. Der Profilgenerator 111 kann dann den Schlüssel und den kryptographischen Algorithmus in das Profil 112 schreiben. Beispielsweise kann das Profil 112 ein Anwendungsprogramm 118 umfassen, das ein Auslesen des Schlüssels nicht zulässt. Das Anwendungsprogramm des Profils 112 kann in einer Ausführungsform ansprechend auf einen Empfang der Challenge unter Verwendung des kryptographischen Algorithmus aus dem Schlüssel die PIN 114 bestimmen.

Fig. 2a zeigt eine schematische Darstellung eines Kommunikationsgeräts 210a mit eSIM-Schaltkreis 212 gemäß einer beispielhaften ersten Ausführungsform. Das Kommunikationsgerät 210a umfasst einen eSIM-Schaltkreis 212, eine Kommunikationsschnittstelle 211 und einen Bildschirm 213.

Der eSIM-Schaltkreis 212 stellt eine elektronischen SIM (eSIM) bereit. Der eSIM-Schaltkreis 212 bildet einen integrierten Schaltkreis der die IMSI ("International Mobile Subscriber Identity" bzw. Internationale Mobile Teilnehmer Identität) und die zugehörige Schlüsselinformation sicher speichert. Die Schlüsselinformation wird dazu genutzt, Benutzer des mobilen Kommunikationsgeräts zu identifizieren und zu authentifizieren. Die in dem eSIM-Schaltkreis 212 gespeicherte Schlüsselinformation kann Folgendes umfassen: eine einzigartige Seriennummer (ICCID, Integrated Circuit Card ID) mit bis zu 20 Zeichen, die IMSI mit MCC (Mobile Country Code), MNC (Mobile Network Code) und MSIN (Mobile Subscriber Identification Number), sicherheitsrelevante Authentifizierungs- und Verschlüsselungsinformationen wie z.B. den Authentifizierungsschlüssel, z.B. in Form eines 128bit einzigartigen Schlüssels für jede SIM, der auch auf dem Authentifizierungsserver (AuC) bzw. dem HSS (Home Subscription Server) gespeichert sein kann, temporäre Informationen in Bezug auf das lokale Netzwerk, beispielsweise LAI (Local Area ID) wie von dem lokalen Träger übermittelt, und eine Liste von Diensten und Anwendungen, zu denen der Benutzer Zugang hat, z.B. eine betreiberspezifische Notfallnummer, die Nummer des SMS (Short Message Service) Servers, den Namen des Dienstanbieters SPN (Service Provider Name), Dienstrufnummern (SDN, Service Dialing Numbers), Parameter zum Kostenprofil, Zusatzdienste (VAS, Value Added Services).

Ferner können auf dem eSIM-Schaltkreis 212 zwei Passwörter gespeichert sein, zum einen die PIN, die hier auch als SIM-PIN oder eSIM-PIN bezeichnet wird, welche für die übliche Nutzung gedacht ist und zum anderen einen persönlichen Entsperrcode (PUK, Personal Unblocking Code) zum Entsperren der PIN bzw. SIM-PIN oder eSIM-PIN.

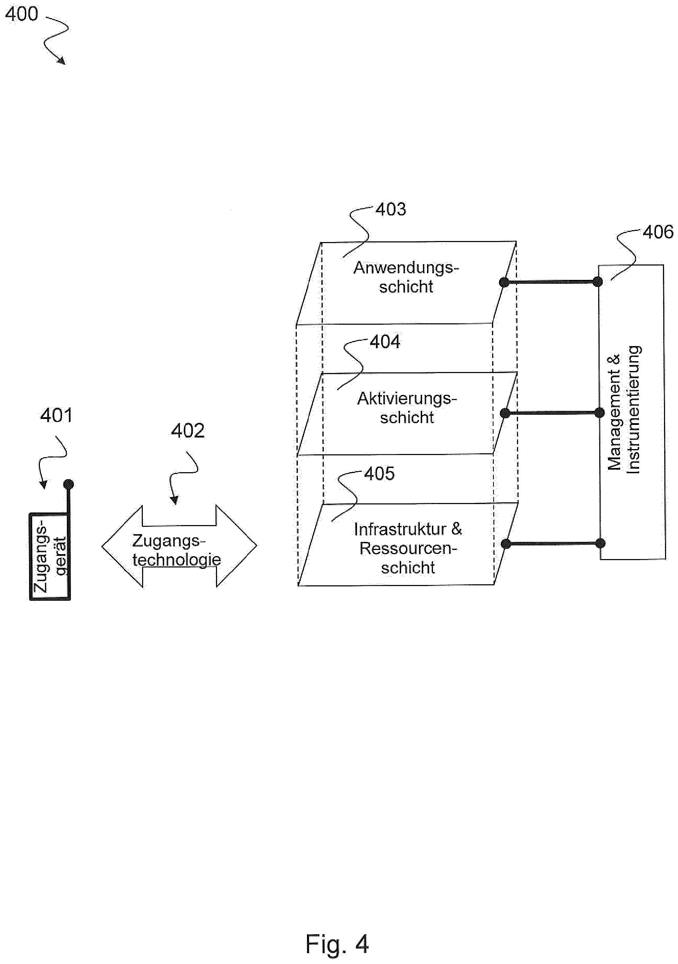

Die Anwendungen können Anwendungsprogramme, sogenannte Apps, oder Dienste auf dem mobilen Kommunikationsgerät 110 bzw. Smartphone sein. Die Anwendungen können auch mit Slices 141, 142 eines 5G Kommunikationsnetzes gekoppelt sein, um dort spezifische Funktionalitäten zu aktivieren bzw. freizuschalten, wie unten zu den Figuren 4 bis 6 näher beschrieben.

Die Kommunikationsschnittstelle 211 empfängt ein Profil 116 eines Benutzers der eSIM mit Informationen über eine persönliche Identifikationsnummer (PIN) (215) der elektronischen SIM. Das Profil 116 kann beispielsweise dem oben in Figur 1a und 1b beschriebenen Profil 116 mit Informationen über die PIN entsprechen. Der Bildschirm 213 zeigt die PIN 215 an.

Das Profil 116 des Benutzers umfasst eine Datenstruktur mit Daten und Anwendungsprogrammen umfasst, die dem Benutzer auf der eSIM bereitgestellt werden, und einen Zugriff auf eine spezifische Netzwerkinfrastruktur ermöglichen.

In einer Ausführungsform empfängt die Kommunikationsschnittstelle 211 die PIN 215 in verschlüsselter Form und der eSIM-Schaltkreis 212 kann die empfangene PIN 215 entschlüsseln und in das Profil 116 schreiben, beispielsweise wie unten zu Figur 2b näher beschrieben.

Fig. 2b zeigt eine schematische Darstellung eines Kommunikationsgeräts 210b mit eSIM-Schaltkreis 212 gemäß einer beispielhaften zweiten Ausführungsform. Das Kommunikationsgerät 210b umfasst einen eSIM-Schaltkreis 212, eine Kommunikationsschnittstelle 211 und einen Bildschirm 213.

Der eSIM-Schaltkreis 212 stellt eine elektronischen SIM (eSIM) bereit, der die oben zu Figur 2a beschriebenen Informationen speichern kann. Die Kommunikationsschnittstelle 211 empfängt ein Profil 116 eines Benutzers der eSIM mit Informationen über eine persönliche Identifikationsnummer (PIN) (215) der elektronischen SIM. Das Profil 116 kann beispielsweise dem oben in Figur 1a und 1b beschriebenen Profil 116 mit Informationen über die PIN entsprechen. Der Bildschirm 213 zeigt die PIN 215 an.

Das Profil 116 des Benutzers umfasst eine Datenstruktur mit Daten und Anwendungsprogrammen umfasst, die dem Benutzer auf der eSIM bereitgestellt werden, und einen Zugriff auf eine spezifische Netzwerkinfrastruktur ermöglichen.

In einer Ausführungsform empfängt die Kommunikationsschnittstelle 211 die PIN 215 in verschlüsselter Form und der eSIM-Schaltkreis 212 kann die empfangene PIN 215 entschlüsseln und in das Profil 116 schreiben.

In einer Ausführungsform kann die PIN 215 über einen kryptographischen Algorithmus aus einem Schlüssel 216 und einer Challenge 220 bestimmt werden. Hierbei kann das Profil 116 kann den Schlüssel 216 und den kryptographischen Algorithmus umfassen.

In einer Ausführungsform umfasst das Profil 116 ein Anwendungsprogramm 118 umfasst, das ein Auslesen des Schlüssels 216 nicht zulässt. Das Anwendungsprogramm 118 des Profils 116 kann beispielsweise ansprechend auf einen Empfang der Challenge 220 unter Verwendung des kryptographischen Algorithmus aus dem Schlüssel 216 die PIN 215 bestimmen.

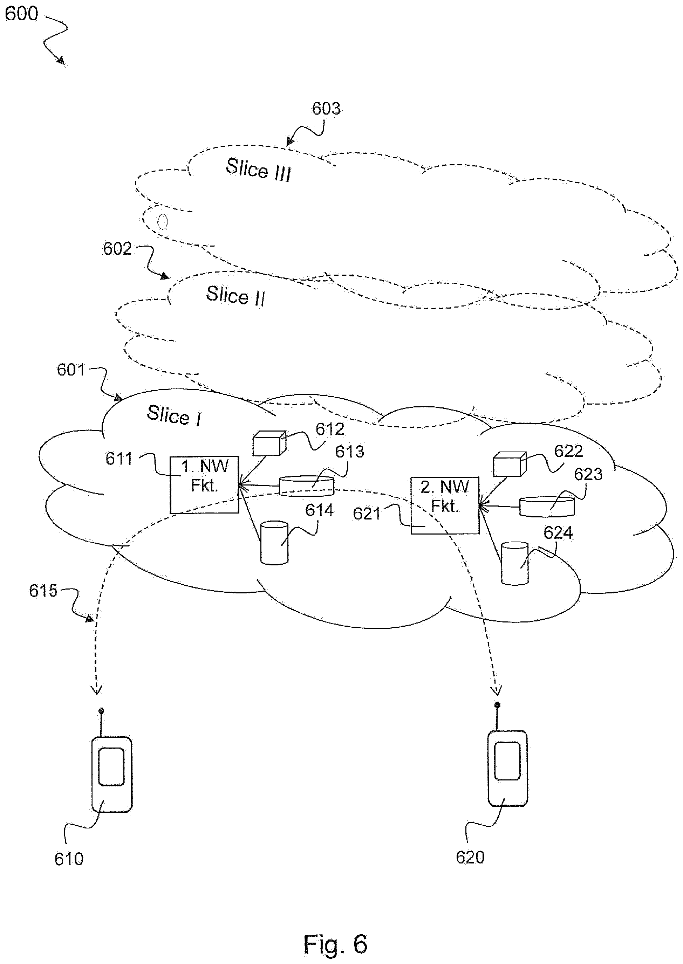

Das Kommunikationsgerät 210b umfasst ferner einen Prozessor 217, der basierend auf dem empfangenen Profil 116 des Benutzers einen Kommunikationskanal 615 über ein Netzwerk 600 einer fünften Generation (5G) oder einer weiteren Generation aufbauen kann, einen Slice 601 des Netzwerks 600 der fünften oder weiteren Generation konfigurieren kann und/oder eine Anwendung 611, 621 des Netzwerks 600 der fünften oder weiteren Generation freischalten kann, wie beispielsweise unten zu Fig. 6 beschrieben.

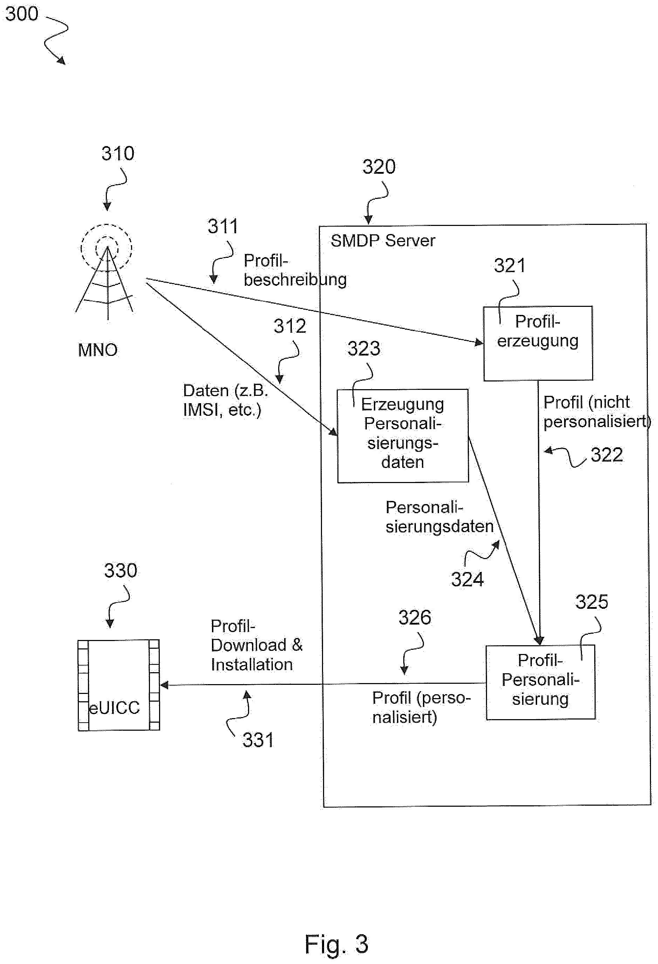

Fig. 3 zeigt eine schematische Darstellung eines Kommunikationssystems 300 mit eUICC 330 und SMDP Server 320 zum Bereitstellen eines personalisierten Profils 326 gemäß einer beispielhaften Ausführungsform. Der SMDP Server 320 stellt eine spezielle Ausführungsform der beiden oben zu den Figuren 1a und 1b beschriebenen SMDP Server 110a, 110b dar.

Der SMDP ("Subscription Manager Data Preparation") Server 320, d.h. Einschreibeverwaltungs- und Datenvorbereitungs-Server 320 ist ein Server, der dem SIM-Modul bzw. der eUICC 330 ein personalisiertes Benutzerprofil 326 zur Verfügung stellt, das dieser über eine Schnittstelle 331 herunterladen und installieren kann. Dazu empfängt der SMDP Server 320 eine Profilbeschreibung 311 und persönliche Daten 312, wie beispielsweise eine IMSI (International Mobile Subscriber ID) von dem mobilen Netzwerkbetreiber (MNO) 310, bei dem der entsprechende Benutzer eingeschrieben bzw. angemeldet ist.

Der SMDP Server 320 umfasst ein Profilerzeugungsmodul 321, mit dem aus der Profilbeschreibung 311 ein (nicht personalisiertes) Profil des Benutzers generiert werden kann. Der SMDP Server 320 umfasst ferner ein Modul 323 zum Erzeugen von Personalisierungsdaten, mit dem aus den persönlichen Daten 312 Personalisierungsdaten 324 erzeugt werden können, beispielsweise Netzwerkzugangsschlüssel, Profilinstallationsschlüssel, Anmeldungs- und Zugangsdaten oder andere Daten. Der SMDP Server 320 umfasst ein Modul 325 zum Erzeugen eines personalisierten Profils 326 aus dem nicht personalisierten Profil 322 und den Personalisierungsdaten 324. Das personalisierte Profil 326 kann beispielsweise mit dem Profilinstallationsschlüssel des Ziel-eUICC 330 verschlüsselt werden. Das personalisierte Profil 326 kann dann der eUICC 330 zum Download und zur Installation in gesicherter Weise bereitgestellt werden, beispielsweise über einen SM-SR Prozess, d.h. "Subscription Manager Secure Routing" bzw. Einschreibemanagement und gesichertes Routing.

Der SMDP Server 320 kann hierbei die Authentifizierung und Autorisierung der eUICC Entität 330 verwalten. Dabei stellt der SMDP Server 320 zusammen mit dem SM-SR Prozess sicher, dass elektronische Daten, die an die eUICC 330 übertragen werden, entsprechend gesichert sind. Zur Gewährleistung der Sicherheit kann ein Zugriff des Benutzers auf sensible Daten, wie das personalisierte Profil 326 hierbei ausgeschlossen werden oder beschränkt werden auf ein absolut notwendiges Minimum. Der SMDP Server 320 kann z.B. jeden Zugriff auf sensible Daten mit einem Eintrag dokumentieren, der Datum, Uhrzeit, Aktivität und Person, die den Zugriff veranlasst hat, umfasst. Sensitive Daten, wie z.B. das personalisierte Profil 326 können dazu mit kryptografischen Schlüsseln unter Nutzung kryptografischer Algorithmen verschlüsselt werden, wobei jeder kryptografische Schlüsselverwaltungsprozess entsprechend dokumentiert werden kann. Der SMDP Server 320 kann ferner über eine umfassende Software bzw. Sicherheits-Patches zur Detektion und Abwehr der jüngst bekannten Virus und Schadsoftware verfügen.

Auf Anforderung des MNO 310 kann der SMDP Server 320 auch die Aktivierung bzw. Freischaltung eines Profils sowie das Löschen eines Profils auf dem eUICC 330 initiieren.

Ein Profil kann hierbei eine Kombination einer Datenstruktur mit Daten und Anwendungen umfassen, welche auf einer eUICC bereitgestellt oder verfügbar sein soll und den Zugriff auf eine spezifische mobile Netzwerkressource erlaubt, wenn es aktiviert ist.

Die Profilbeschreibung 311 kann sich aus Profil-Metadaten zusammensetzen, d.h. Informationen über ein Profil, wie z.B. MSISDN (Mobile Subscriber ISDN) oder Daten für den SM-SR Prozess zum Managen des eUICC 330.

Der SMDP Server kann gemäß einem SAS ("Security Accreditation Scheme" bzw. Sicherheitsakkreditierungsschema) Standard realisiert sein. Der SMDP Server kann beispielsweise gemäß dem GSMA SAS Standard realisiert sein, z.B. in der Version 1.0 vom 13. Oktober 2014.

Fig. 4 zeigt eine schematische Darstellung einer 5G Systemarchitektur 400. Die 5G Systemarchitektur 400 umfasst einen Bereich mit 5G Kommunikationsendgeräten 401, die über verschiedene Zugangstechnologien 402 mit einer mehrschichtigen Kommunikationsstruktur verbunden sind, welche eine Infrastruktur- & Ressourcenschicht 405, eine Aktivierungsschicht 404 und eine Anwendungsschicht 403 umfasst, die über eine Management- & Instrumentierungsebene 406 verwaltet werden.

Die Infrastruktur- & Ressourcenschicht 405 umfasst die physikalischen Ressourcen einer konvergenten Netzwerkstruktur aus Festnetz- und Mobilfunknetzkomponenten ("Fixed-Mobile Convergence") mit Zugangsknoten, Cloud-Knoten (bestehend aus Verarbeitungs- und Speicherknoten), 5G Geräten wie z.B. Mobiltelefonen, tragbaren Geräten, CPEs, Maschinenkommunikationsmodulen und anderen, Netzwerkknoten und zugehörigen Links. 5G Geräte können vielfältige und konfigurierbare Fähigkeiten umfassen und beispielsweise als Relay oder Hub agieren oder abhängig von dem jeweiligen Kontext als Computer/Speicher Ressource arbeiten. Diese Ressourcen werden den höheren Schichten 404, 403 und der Management- & Instrumentierungsebene 406 über entsprechend APIs (Anwendungsprogramm-Schnittstellen) zur Verfügung gestellt. Das Überwachen der Leistungsfähigkeit und der Konfigurationen sind inhärenter Teil solcher APIs.

Die Aktivierungsschicht 404 umfasst eine Bibliothek von Funktionen, die innerhalb eines konvergierten Netzwerks in Form von Bausteinen einer modularen Architektur benötigt werden. Diese umfassen Funktionen, die durch Softwaremodule realisiert werden, die von einem Aufbewahrungsort der gewünschten Lokation abgerufen werden können, und einen Satz von Konfigurationsparametern für bestimmte Teile des Netzwerks, z.B. den Funkzugang. Diese Funktionen und Fähigkeiten können auf Anforderung durch die Management- & Instrumentierungsebene 406 aufgerufen werden durch Nutzung der dafür vorgesehenen APIs. Für bestimmte Funktionen können mehrfache Varianten existieren, z.B. verschiedene Implementierungen derselben Funktionalität welche verschiedene Leistungsfähigkeit oder Charakteristik haben. Die verschiedenen Grade der Leistungsfähigkeit und der angebotenen Fähigkeiten können dazu verwendet werden, um die Netzwerkfunktionalitäten wesentlich weiter zu unterscheiden als es in heutigen Netzen möglich ist, z.B. als Mobilitätsfunktion eine nomadische Mobilität, eine Fahrzeugmobilität oder eine Luftverkehrsmobilität in Abhängigkeit der spezifischen Bedürfnisse anzubieten.

Die Anwendungsschicht 403 umfasst spezifische Anwendungen und Dienste des Netzwerkbetreibers, des Unternehmens, des vertikalen Operators oder von Drittparteien, die das 5G Netzwerk nutzen. Die Schnittstelle zu der Management- & Instrumentierungsebene 406 erlaubt zum Beispiel, bestimmte, d.h. dedizierte Netzwerk Slices (Netzwerkscheiben) für eine Anwendung aufzubauen, oder eine Anwendung einem existierenden Netzwerk Slice zuzuweisen.

Die Management- & Instrumentierungsebene 406 ist der Kontaktpunkt, um die geforderten Anwendungsfälle (Use Cases, auch Geschäftsmodelle) in tatsächliche Netzwerkfunktionen und Slices umzusetzen. Sie definiert die Netzwerk Slices für ein gegebenes Anwendungsszenario, verkettet die dafür relevanten modularen Netzwerkfunktionen, ordnet die relevanten Leistungsfähigkeitskonfigurationen zu und bildet alles auf die Ressourcen der Infrastruktur- & Ressourcenschicht 405 ab. Die Management- & Instrumentierungsebene 406 verwaltet auch die Skalierung der Kapazität dieser Funktionen als auch ihre geographische Verteilung. In bestimmten Anwendungsfällen kann sie auch Fähigkeiten aufweisen, die es Drittparteien erlauben, durch Nutzung der APIs ihre eigenen Netzwerk Slices zu erzeugen und zu verwalten. Aufgrund der vielzähligen Aufgaben der Management- & Instrumentierungsebene 406 handelt es sich dabei nicht um einen monolithischen Block von Funktionalität sondern vielmehr um eine Sammlung modularer Funktionen, die Fortschritte integrieren, die in verschiedenen Netzwerkdomänen erzielt wurden, wie beispielsweise NFV ("network function virtualization" = Netzwerkfunktionsvirtualisierung), SDN ("software-defined networking" = Software-definierte Vernetzung) oder SON ("self-organizing networks" = selbstorganisierende Netzwerke). Die Management- & Instrumentierungsebene 106 nutzt dabei datenunterstützte Intelligenz, um alle Aspekte der Dienstanordnung und - bereitstellung zu optimieren.

Mit dem oben zu den Figuren 2a und 2b beschriebenen (mobilen) Kommunikationsgerät 210a, 210b, das als Zugangsgerät 401 genutzt wird, kann ein Kommunikationskanal über das Netzwerk 400 aufgebaut werden. Dazu kann der Prozessor 215 den Kommunikationskanal über das Netzwerk 400 aufbauen. Der Prozessor 215 kann beispielsweise einen Slice der Anwendungsschicht 403 konfigurieren lassen, indem er eine Signalisierungsnachricht, welche die entsprechende Anforderung und Konfigurationsparameter dazu umfasst, an die Management & Instrumentierungsschicht 406 übermittelt. Der Prozessor 215 kann beispielsweise über die besagte Signalisierungsnachricht an die Management & Instrumentierungsschicht 406 eine Anwendung aus der Anwendungsschicht 403 des 5G Netzwerks 400 freischalten lassen.

Das 5G Netzwerk 400 steigert die Leistungsfähigkeit der Kommunikation und realisiert insbesondere einen höheren Datendurchsatz, eine geringere Verzögerung, eine besonders hohe Zuverlässigkeit, eine weitaus höhere Verbindungsdichte und einen größeren Mobilitätsbereich, erhöht zum anderen aber auch die Flexibilität im Betrieb und stellt maßgeschneiderte Funktionen mit dem geringstmöglichen Einsatz von Mitteln bereit. Diese erhöhte Leistungsfähigkeit geht einher mit der Fähigkeit zur Steuerung stark heterogener Umgebungen und der Fähigkeit zur Sicherung von Vertrauen, Identität und Privatsphäre der Nutzer.

Die hier vorgestellten Geräte, Systeme und Verfahren sind dazu vorgesehen, die Leistungsfähigkeit der Kommunikation in Kommunikationsnetzen zu verbessern, insbesondere in 5G Kommunikationsnetzen mit mehreren Netzwerk Slices (Netzwerkscheiben), wie im Folgenden beschrieben.

Fig. 5 zeigt eine schematische Darstellung eines 5G-Kommunikationsnetzwerks mit mehreren Slices (Netzwerkscheiben) 500. Das 5G-Kommunikationsnetzwerk 500 umfasst eine Infrastruktur- & Ressourcenschicht 405, eine Aktivierungsschicht 404 und eine Anwendungsschicht 403 wie oben zu Figur 4 beschrieben.

Die Infrastruktur- & Ressourcenschicht 405 umfasst alle physikalischen Aktiva, die einem Netzwerkbetreiber zugeordnet sind, d.h. Standorte, Kabel, Netzwerkknoten etc. Diese Schicht 405 bildet die Grundlage für alle Netzwerk Slices. Sie ist so generisch wie möglich aufgebaut ohne zu viele spezialisierte physikalische Einheiten. Die Infrastruktur- & Ressourcenschicht 405 verschleiert jede Art von anwenderspezifischer Implementierung gegenüber den oberen Schichten, so dass die verbleibenden Systeme für verschiedene Slices bestmöglich genutzt werden können. Komponenten der Infrastruktur- & Ressourcenschicht 405 basieren auf Hardware und Software bzw. Firmware, die für die jeweilige Operation benötigt wird und dabei als Infrastruktur- & Ressourcenschicht 405 den darüber liegenden Schichten als Ressourcenobjekte zu Verfügung gestellt wird. Beispielsweise umfassen Objekte der Infrastruktur- & Ressourcenschicht 405 virtuelle Maschinen, virtuelle Links bzw. Verbindungen und virtuelle Netzwerke, z.B. virtuelle Zugangsknoten 531, 532, 533, virtuelle Netzwerkknoten 534, 535, 536, 537 und virtuelle Computerknoten 538, 539, 540. Wie der Begriff "virtuell" bereits sagt, stellt die Infrastruktur- & Ressourcenschicht 405 die Objekte in der Form einer "Infrastruktur als Dienst" 551, d.h. in einer abstrahierenden, virtualisierten Form der nächsthöheren Schicht 404 zur Verfügung.

Die Aktivierungsschicht 404 ist oberhalb der Infrastruktur- & Ressourcenschicht 405 angeordnet. Sie nutzt die Objekte der Infrastruktur- & Ressourcenschicht 405 und fügt diesen zusätzliche Funktionalität in Form von (z.B. nicht-physikalischen) Software Objekten /VNFs hinzu um das Erzeugen von jeder Art von Netzwerk Slices zu ermöglichen und so eine Plattform als Dienst der nächsthöheren Schicht 403 bereitzustellen.

Softwareobjekte können in jeder Granularität existieren, und ein winziges oder ein sehr großes Fragment eines Netzwerk-Slice umfassen. Um die Erzeugung von Netzwerk Slices auf einem geeigneten Abstraktionslevel zu erlauben können in der Aktivierungsschicht 404 verschiedene abstrahierte Objekte 521 mit anderen abstrahierten Objekten und mit virtuellen Netzwerkfunktionen 522 kombiniert werden, um kombinierte Objekte 523 zu bilden, die in aggregierte Objekten 524 überführt werden können und in einer Objektbibliothek 525 der nächsthöheren Ebene zur Verfügung gestellt werden. Damit kann die Komplexität hinter den Netzwerk Slices verborgen werden. Beispielsweise kann ein Nutzer einen mobilen Breitband-Slice erzeugen und dabei lediglich KPI (Key Performance Indikator) definieren ohne dabei spezifische Features wie individuelle lokale Antennenbedeckung, Backhaul-Verbindungen und spezifische Parametrisierungsgrade spezifizieren zu müssen. Um eine offene Umgebung zu unterstützen und es zu erlauben, Netzwerkfunktionen auf Anforderung hinzuzufügen oder zu löschen, ist eine wichtige Fähigkeit der Aktivierungsschicht 404, dass sie die dynamische Umordnung von Funktionen und Konnektivitäten in einem Netzwerk Slice unterstützt, z.B. durch Verwendung von SFC ("Service Function Chaining" = Dienstfunktionenverkettung) oder modifizierender Software, so dass die Funktionalität eines Slice vollständig vordefiniert werden kann und sowohl näherungsweise statische Softwaremodule als auch dynamisch hinzufügbare Softwaremodule umfassen kann.

Ein Netzwerk Slice kann dabei als software-definierte Entität betrachtet werden, die auf einem Satz von Objekten basiert, welche ein vollständiges Netzwerk definieren. Die Aktivierungsschicht 404 spielt für den Erfolg dieses Konzepts eine Schlüsselrolle da sie alle Softwareobjekte umfasst kann, die notwendig sind, um die Netzwerk Slices und die entsprechenden Fertigkeiten zum Handhaben der Objekte bereitzustellen. Die Aktivierungsschicht 404 kann als eine Art von Netzwerk-Betriebssystem betrachtet werden komplementiert durch eine Netzwerkerzeugungsumgebung. Eine wesentliche Aufgabe der Aktivierungsschicht 404 ist das Definieren der entsprechenden Abstraktionsebenen. So haben Netzwerkbetreiber ausreichend Freiraum um ihre Netzwerk Slices zu designen während der Plattform-Betreiber immer noch die physikalischen Knoten instand halten und optimieren kann. So wird beispielsweise die Ausführung der alltäglichen Aufgaben wie das Hinzufügen oder Ersetzen von NodeBs etc. ohne das Einschreiten der Netzwerkkunden unterstützt. Die Definition geeigneter Objekte, welche ein vollständiges Telekommunikationsnetz modellieren, ist eine der wesentlichen Aufgaben der Aktivierungsschicht 104 beim Entwickeln der Netzwerk Slices Umgebung.

Ein Netzwerk Slice, auch als 5G Slice bezeichnet unterstützt die Kommunikationsdienste eines bestimmten Verbindungstyps mit einer bestimmten Art der Handhabung der C (Control bzw. Steuerungs-) und U-(User Data bzw. Nutzerdaten) Schicht. Ein 5G Slice setzt sich zusammen aus einer Sammlung von verschiedenen 5G Netzwerkfunktionen und spezifischen Funkzugangstechnologie- (RAT) Einstellungen, die zusammen kombiniert werden zum Nutzen des spezifischen Anwendungsfalls bzw. Use Case. Daher kann ein 5G Slice alle Domänen des Netzwerks umspannen, z.B. Softwaremodule, die auf Cloud-Knoten laufen, spezifische Konfigurationen des Transportnetzwerks, die eine flexible Lokation der Funktionen unterstützen, eine bestimmte Funkkonfiguration oder selbst eine bestimmte Zugangstechnologie so gut wie einer Konfiguration der 5G Geräte. Nicht alle Slices enthalten dieselben Funktionen, einige Funktionen die heute als wesentlich erscheinen für eine mobiles Netzwerk können sogar in einigen Slices nicht vorkommen. Die Intention des 5G Slice ist es, nur die Funktionen bereitzustellen, die für den spezifischen Use Case notwendig sind und alle anderen unnötigen Funktionalitäten zu vermeiden. Die Flexibilität hinter dem Slice Konzept ist der Schlüssel sowohl für das Ausweiten existierender Anwendungsfälle als auch für das Erzeugen neuer Anwendungsfälle. Drittpartei-Geräten kann damit Erlaubnis gewährt werden, bestimmte Aspekte des Slicing über geeignete APIs zu steuern, um so maßgeschneiderte Dienste bereitstellen zu können.

Die Anwendungsschicht 403 umfasst alle erzeugten Netzwerk Slices 510b, 511b, 512b und bietet diese als "Netzwerk als Service" verschiedenen Netzwerknutzern, z.B. verschiedenen Kunden an. Das Konzept erlaubt die Wiederbenutzung von definierten Netzwerk Slices 510b, 511b, 512b für verschiedene Anwender, z.B. Kunden, beispielsweise als eine neue Netzwerk Slice Instanz 510a, 511a, 512a. D.h. ein Netzwerk Slice 510b, 511b, 512b, welcher beispielsweise einer Automotive Anwendung zugeordnet ist, kann auch für Anwendungen verschiedener anderer industrieller Anwendungen genutzt werden. Die Slices Instanzen 510a, 511a, 512a, die von einem ersten Anwender erzeugt wurden, können beispielsweise unabhängig von den Slice Instanzen sein, die von einem zweiten Anwender erzeugt wurden, und das obwohl die gesamte Netzwerk Slice Funktionalität dieselbe sein kann.

Mit dem oben zu den Figuren 2a und 2b beschriebenen (mobilen) Kommunikationsgerät 210a, 210b, das als Zugangsgerät 401 genutzt wird, kann ein Kommunikationskanal über das Netzwerk 400 aufgebaut werden. Dazu kann der Prozessor 215 den Kommunikationskanal über das Netzwerk 400 aufbauen. Der Prozessor 215 kann beispielsweise einen Slice der Anwendungsschicht 403 konfigurieren lassen, indem er eine Signalisierungsnachricht, welche die entsprechende Anforderung und Konfigurationsparameter dazu umfasst, an die Management & Instrumentierungsschicht 406 übermittelt. Der Prozessor 215 kann beispielsweise über die besagte Signalisierungsnachricht an die Management & Instrumentierungsschicht 406 eine Anwendung aus der Anwendungsschicht 403 des 5G Netzwerks 400 freischalten lassen.

Fig. 6 zeigt eine schematische Darstellung eines 5G-Kommunikationsnetzwerkes 600 mit Kommunikationskanal 615 zur Kommunikation zwischen zwei mobilen Kommunikationsgeräten gemäß einer beispielhaften Ausführungsform.

Das Kommunikationsgerät 610 kann einen Kommunikationskanal 615 über das Netzwerk 600 aufbauen, beispielsweise zu einem zweiten Kommunikationsgerät 620. Das Kommunikationsgerät 610 kann dem oben zu den Figuren 2a und 2b beschriebenen (mobilen) Kommunikationsgeräten 210a, 210b entsprechen. Zur Initiierung des Kommunikationskanals 615 kann der Prozessor 215 basierend auf dem empfangenen Profil des Benutzers einen Kommunikationskanal 615 über das Netzwerk 600 der fünften Generation (5G) oder einer weiteren Generation aufzubauen, einen Slice 601 des Netzwerks 600 der fünften oder weiteren Generation konfigurieren und/oder eine Anwendung des Netzwerks 600 der fünften oder weiteren Generation freischalten.

Der Prozessor 215 kann beispielsweise den Netzwerk-Slice 601 konfigurieren lassen, indem er eine Signalisierungsnachricht, welche die entsprechende Anforderung und Konfigurationsparameter dazu umfasst, an die in Figur 4 beschriebene Management & Instrumentierungsschicht 406 übermittelt. Diese kann beispielsweise eine erste Netzwerkfunktion 611 und eine zweite Netzwerkfunktion 621 im Slice 601 konfigurieren, welche dann die notwendigen Ressourcen 612, 613, 614, 622, 623, 624 zum Aufbau des Kommunikationskanals 615 allokiert. Der Prozessor 215 kann beispielsweise über die besagte Signalisierungsnachricht an die Management & Instrumentierungsschicht 406 eine Anwendung aus der Anwendungsschicht 403 des 5G Netzwerks 400 gemäß Figur 4 freischalten lassen, z.B. den Netzwerk-Slice 601 oder die Netzwerkfunktionen 611, 621 zum Allokieren der erforderlichen Netzwerkressourcen 612, 613, 614, 622, 623, 624 zum Aufbau des Kommunikationskanals 615.

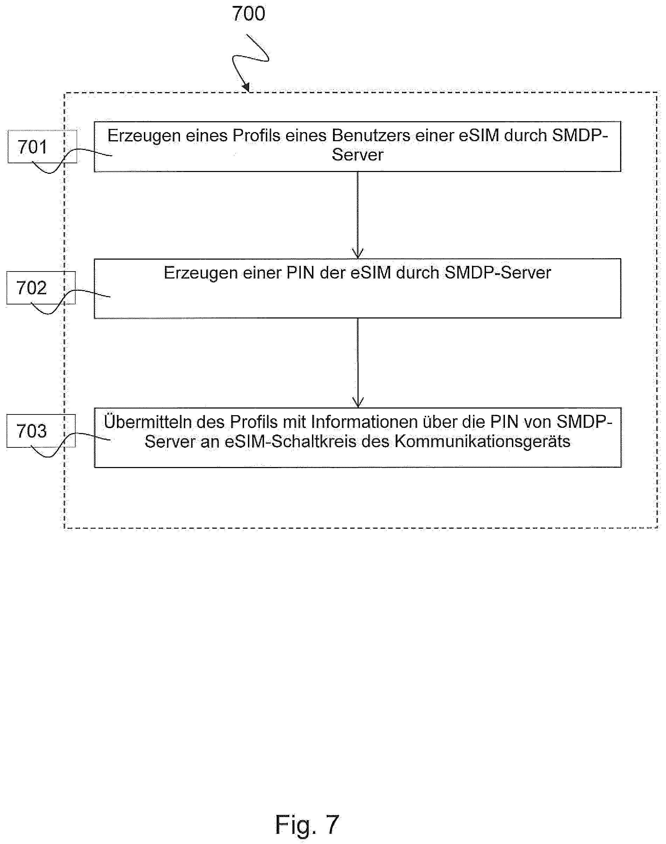

Fig. 7 zeigt eine schematische Darstellung eines Verfahrens 700 zum Übermitteln eines Profils von einem SMDP Server an einen eSIM-Schaltkreis eines Kommunikationsgeräts, gemäß einer beispielhaften Ausführungsform.

Das Verfahren umfasst einen ersten Schritt 701: Erzeugen eines Profils eines Benutzers einer eSIM durch den SMDP Server, beispielsweise gemäß einem SMDP Server 110 wie oben zu den Figuren 1a und 1b beschrieben.

Das Verfahren 700 umfasst einen zweiten Schritt 702: Erzeugen einer PIN der eSIM durch den SMDP Server, beispielsweise durch einen SMDP Server 110 wie oben zu den Figuren 1a und 1b beschrieben.

Das Verfahren 700 umfasst einen dritten Schritt 703: Übermitteln des Profils mit Informationen über die PIN von dem SMDP Server an den eSIM-Schaltkreis des Kommunikationsgeräts, beispielsweise wie oben zu den Figuren 1a, 1b, 2a und 2b beschrieben.

Das Verfahren 700 kann beispielsweise in einem Kommunikationsnetzwerk oder Kommunikationssystem 100a, 100b, 200a, 200b, 300, 400, 500, 600, wie in den Figuren 1a bis 6 beschrieben, eingesetzt werden, insbesondere auf einem mobilen Kommunikationsgerät 210a, 210b, 401, 610, 620 wie zu den Figuren 2a, 2b, 4 und 6 beschrieben oder auf einer eUICC 330 wie oben zu Figur 3 beschrieben. Das Verfahren kann ferner weitere Schritte umfassen, mit denen die oben zu den Figuren 1a bis 6 beschriebenen Funktionalitäten auf den genannten Geräten realisiert werden können.

Ein Aspekt der Erfindung umfasst auch ein Computerprogrammprodukt, das direkt in den internen Speicher eines digitalen Computers geladen werden kann und Softwarecodeabschnitte umfasst, mit denen das zu Fig. 7 beschriebene Verfahren 700 oder die zu den Figuren 1a bis 6 beschriebenen Vorgänge ausgeführt werden können, wenn das Produkt auf einem Computer läuft. Das Computerprogrammprodukt kann auf einem computergeeigneten nicht-transitorischen Medium gespeichert sein und computerlesbare Programmittel umfassen, die einen Computer veranlassen, das Verfahren 700 auszuführen oder die Netzkomponenten der in den Figuren 1a bis 6 beschriebenen Kommunikationsnetze zu implementieren bzw. zu steuern.

Der Computer kann ein PC sein, beispielsweise ein PC eines Computernetzwerks. Der Computer kann als ein Chip, ein ASIC, ein Mikroprozessor oder ein Signalprozessor realisiert sein und in einem Computernetzwerk, beispielsweise in einem Kommunikationsnetz wie in den Figuren 1a bis 6 beschrieben, angeordnet sein.

Es ist selbstverständlich, dass die Merkmale der verschiedenen beispielhaft hierin beschriebenen Ausführungsformen miteinander kombiniert werden können, außer wenn spezifisch anderweitig angegeben. Wie in der Beschreibung und den Zeichnungen dargestellt müssen einzelne Elemente, die in Verbindung stehend dargestellt wurden, nicht direkt miteinander in Verbindung stehen; Zwischenelemente können zwischen den verbundenen Elementen vorgesehen sein. Ferner ist es selbstverständlich, dass Ausführungsformen der Erfindung in einzelnen Schaltungen, teilweise integrierten Schaltungen oder vollständig integrierten Schaltungen oder Programmiermitteln implementiert sein können. Der Begriff "beispielsweise" ist lediglich als ein Beispiel gemeint und nicht als das Beste oder Optimale. Es wurden bestimmte Ausführungsformen hierin veranschaulicht und beschrieben, doch für den Fachmann ist es offensichtlich, dass eine Vielzahl von alternativen und/oder gleichartigen Implementierungen anstelle der gezeigten und beschriebenen Ausführungsformen verwirklicht werden können, ohne vom Konzept der vorliegenden Erfindung abzuweichen.

### Bezugszeichenliste

- 100a:: Kommunikationssystem bzw. Kommunikationsnetzwerk
- 110a:: SMDP Server gemäß einer ersten Ausführungsform
- 111:: Profilgenerator
- 112:: eSIM Profil
- 113:: PIN Generator
- 114:: eSIM PIN
- 115:: Kommunikationsschnittstelle
- 116:: Profil mit Information über die eSIM PIN

- 100b:: Kommunikationssystem bzw. Kommunikationsnetzwerk
- 110a:: SMDP Server gemäß einer zweiten Ausführungsform
- 117:: Daten des eSIM Profils
- 118:: Anwendungsprogramme bzw. Apps des eSIM Profils
- 130:: MNO, Mobilfunk Netzwerkbetreiber
- 131:: Daten zwischen MNO und SMDP-Server
- 132:: Netzwerkschnittstelle
- 133:: profilbeschreibende Daten
- 134:: persönliche Daten

- 200a:: Kommunikationssystem bzw. Kommunikationsnetzwerk
- 210a:: Kommunikationsgerät, insbesondere mobiles Kommunikationsgerät gemäß einer ersten Ausführungsform
- 211:: Kommunikationsschnittstelle
- 212:: e-SIM Schaltkreis mit PIN
- 213:: Bildschirm
- 234:: Nutzer bzw. Anwender

- 200b:: Kommunikationssystem bzw. Kommunikationsnetzwerk
- 210b:: Kommunikationsgerät, insbesondere mobiles Kommunikationsgerät gemäß einer zweiten Ausführungsform
- 215:: PIN
- 216:: Schlüssel und kryptografischer Algorithmus
- 217:: Prozessor
- 220:: Challenge

- 300:: Kommunikationssystem
- 310:: MNO bzw. Mobilfunknetzwerk-Betreiber
- 311:: Profilbeschreibung
- 312:: persönliche Daten, z.B. IMSI etc.
- 320:: SMDP Server 320
- 321:: Profilerzeugung
- 322:: Profil, nicht personalisiert
- 323:: Erzeugung Personalisierungsdaten
- 324:: Personalisierungsdaten
- 325:: Profil-Personalisierung
- 326:: personalisiertes Profil
- 330:: eUICC
- 331:: Profil Download und Installation

- 400:: 5G Systemarchitektur
- 401:: Zugangsgerät, Kommunikationsendgerät, UE
- 402:: Zugangstechnologie
- 403:: Anwendungsschicht
- 404:: Aktivierungsschicht
- 405:: Infrastruktur & Ressourcenschicht
- 406:: Management & Instrumentierungsschicht

- 500:: 5G Kommunikationsnetzwerk mit mehreren Slices
- 510a:: erste Slice Instanz
- 510b:: erste Netzwerk Slice
- 511a:: zweite Slice Instanz
- 511b:: zweite Netzwerk Slice
- 512a:: dritte Slice Instanz
- 512b:: dritte Netzwerk Slice
- 513:: Slice Komposition
- 521:: abstrahierte Objekte
- 522:: virtuelle Netzwerkfunktionen
- 523:: kombinierte Objekte
- 524:: aggregierte Objekte
- 525:: Objektbibliothek
- 531:: Zugangsknoten
- 532:: Zugangsknoten
- 533:: Zugangsknoten
- 534:: virtueller Netzwerkknoten
- 535:: virtueller Netzwerkknoten
- 536:: virtueller Netzwerkknoten
- 537:: virtueller Netzwerkknoten
- 538:: Computerknoten
- 539:: Computerknoten
- 540:: Computerknoten
- 551:: Infrastrukturdienste

- 600:: Kommunikationsnetzwerk bzw. Kommunikationssystem
- 601:: erstes Subnetzwerk bzw. Slice I oder einfach Subnetzwerk
- 602:: zweites Subnetzwerk bzw. Slice II
- 603:: drittes Subnetzwerk bzw. Slice III
- 610:: erstes mobiles Kommunikationsgerät,
- 611:: erste Kommunikationsentität mit erster Netzwerkfunktion
- 612, 613, 614:: Netzwerkkomponenten, die der ersten Kommunikationsentität mittels der ersten Netzwerkfunktion zugewiesen werden
- 620:: zweites mobiles Kommunikationsgerät,
- 621:: zweite Kommunikationsentität mit zweiter Netzwerkfunktion
- 622, 623, 624:: Netzwerkkomponenten, die der zweiten Kommunikationsentität mittels der zweiten Netzwerkfunktion zugewiesen werden

- 700:: Verfahren zum Übermitteln eines Profils
- 701:: erster Schritt: Erzeugen eines Profils
- 702:: zweiter Schritt: Erzeugen einer PIN
- 703:: dritter Schritt: Übermitteln des Profils mit Informationen über die PIN

## Patentansprüche

1. SMDP-Server (110a, 110b), mit:
einem Profilgenerator (111) zum Erzeugen eines Profils (112) eines Benutzers einer elektronischen SIM, eSIM; einem PIN-Generator (113) zum Erzeugen einer persönlichen Identifikationsnummer, PIN(114), der elektronischen SIM; und
einer Kommunikationsschnittstelle (115) zum Übermitteln des Profils mit Informationen über die PIN (116) an einen eSIM-Schaltkreis (212) eines Kommunikationsgeräts (210a, 210b),
**dadurch gekennzeichnet, dass**
der PIN-Generator (113) ausgebildet ist, einen Schlüssel und eine Challenge gemäß einem Challenge-Response Verfahren zu erzeugen, so dass die PIN (114) über einen kryptographischen Algorithmus aus dem Schlüssel und der Challenge bestimmbar ist; und der Profilgenerator (111) ausgebildet ist, den Schlüssel und den kryptographischen Algorithmus (135) in das Profil (112) zu schreiben.

2. SMDP-Server (110a, 110b) nach Anspruch 1,
wobei das Profil (112) des Benutzers eine Datenstruktur mit Daten (117) und Anwendungsprogrammen (118) umfasst, die dem Benutzer auf der eSIM bereitgestellt werden, und einen Zugriff auf eine spezifische Netzwerkinfrastruktur ermöglichen.

3. SMDP-Server (110b) nach Anspruch 1 oder 2, mit:
einer Netzwerkschnittstelle (132) zum Empfangen von profilbeschreibenden Daten (133) von einem mobilen Kommunikationsnetzwerk (130), bei dem der Benutzer registriert ist,
wobei der Profilgenerator (111) ausgebildet ist, basierend auf den profilbeschreibenden Daten (133) das Profil (112) des Benutzers zu erzeugen.

4. SMDP-Server (110b) nach Anspruch 3,
wobei die Netzwerkschnittstelle (132) ferner ausgebildet ist, persönliche Daten (134) des Benutzers zu empfangen, und
wobei der PIN-Generator (113) ausgebildet ist, die PIN (114) der elektronischen SIM basierend auf den empfangenen persönlichen Daten (134) des Benutzers zu erzeugen.

5. SMDP-Server (110b) nach einem der Ansprüche 1 bis 4,
wobei das Profil (112) ein Anwendungsprogramm (118) umfasst, das ein Auslesen des Schlüssels nicht zulässt.

6. SMDP-Server (110b) nach Anspruch 5,
wobei das Anwendungsprogramm des Profils (112) ausgebildet ist, ansprechend auf einen Empfang der Challenge unter Verwendung des kryptographischen Algorithmus aus dem Schlüssel die PIN (114) zu bestimmen.

7. Kommunikationsgerät (210a, 210b), mit:
einem eSIM-Schaltkreis (212) zum Bereitstellen einer elektronischen SIM, eSIM;
einer Kommunikationsschnittstelle (211) zum Empfangen eines Profils (116) eines, Benutzers der eSIM mit Informationen über eine persönliche Identifikationsnummer PIN (215), der elektronischen SIM; und
einem Bildschirm (213) zum Anzeigen der PIN (215),
**dadurch gekennzeichnet, dass**
die PIN (215) über einen kryptographischen Algorithmus aus einem Schlüssel (216) und einer Challenge (220) bestimmbar ist; und das Profil (116) den Schlüssel (216) und den kryptographischen Algorithmus umfasst.

8. Kommunikationsgerät (210a, 210b) nach Anspruch 7,
wobei das Profil (116) des Benutzers eine Datenstruktur mit Daten (117) und Anwendungsprogrammen (118) umfasst, die dem Benutzer auf der eSIM bereitgestellt werden, und einen Zugriff auf eine spezifische Netzwerkinfrastruktur ermöglichen.

9. Kommunikationsgerät (210a, 210b) nach Anspruch 7 oder 8,
wobei das Profil (116) ein Anwendungsprogramm (118) umfasst, das ein Auslesen des Schlüssels (216) nicht zulässt; und
wobei das Anwendungsprogramm (118) des Profils (116) ausgebildet ist, ansprechend auf einen Empfang der Challenge (220) unter Verwendung des kryptographischen Algorithmus aus dem Schlüssel (216) die PIN (215) zu bestimmen.

10. Kommunikationsgerät (210a, 210b) nach einem der Ansprüche 7 bis 9, mit:
einem Prozessor (217), der ausgebildet ist, basierend auf dem empfangenen Profil (116) des Benutzers einen Kommunikationskanal (615) über ein Netzwerk (600) einer fünften Generation, 5G, oder einer weiteren Generation aufzubauen, einen Slice (601) des Netzwerks (600) der fünften oder weiteren Generation zu konfigurieren und/oder eine Anwendung (611, 621) des Netzwerks (600) der fünften oder weiteren Generation freizuschalten.

## Claims

1. SMDP server (110a, 110b) having:
a profile generator (111) for generating a profile (112) of a user of an electronic SIM, eSIM;
a PIN generator (113) for generating a personal identification number, PIN (114), of the electronic SIM; and
a communication interface (115) for transmitting the profile with information relating to the PIN (116) to an eSIM circuit (212) of a communication device (210a, 210b),
**characterized in that**
the PIN generator (113) is configured to generate a key and a challenge according to a challenge-response method, with the result that the PIN (114) can be determined from the key and the challenge using a cryptographic algorithm; and the profile generator (111) is configured to write the key and the cryptographic algorithm (135) into the profile (112).

2. SMDP server (110a, 110b) according to Claim 1,
wherein the profile (112) of the user comprises a data structure containing data (117) and application programs (118) which are made available to the user on the eSIM and make it possible to access a specific network infrastructure.

3. SMDP server (110b) according to Claim 1 or 2, having:
a network interface (132) for receiving profile-describing data (133) from a mobile communication network (130) in which the user is registered,
wherein the profile generator (111) is configured to generate the profile (112) of the user on the basis of the profile-describing data (133).

4. SMDP server (110b) according to Claim 3,
wherein the network interface (132) is also configured to receive personal data (134) relating to the user, and
wherein the PIN generator (113) is configured to generate the PIN (114) of the electronic SIM on the basis of the received personal data (134) relating to the user.

5. SMDP server (110b) according to one of Claims 1 to 4,
wherein the profile (112) comprises an application program (118) which does not allow the key to be read.

6. SMDP server (110b) according to Claim 5,
wherein the application program of the profile (112) is configured to determine the PIN (114) from the key using the cryptographic algorithm in response to reception of the challenge.

7. Communication device (210a, 210b) having:
an eSIM circuit (212) for providing an electronic SIM, eSIM;
a communication interface (211) for receiving a profile (116) of a user of the eSIM with information relating to a personal identification number, PIN (215), of the electronic SIM; and
a screen (213) for displaying the PIN (215),
**characterized in that**
the PIN (215) can be determined from a key (216) and a challenge (220) using a cryptographic algorithm; and the profile (116) comprises the key (216) and the cryptographic algorithm.

8. Communication device (210a, 210b) according to Claim 7,
wherein the profile (116) of the user comprises a data structure containing data (117) and application programs (118) which are made available to the user on the eSIM and make it possible to access a specific network infrastructure.

9. Communication device (210a, 210b) according to Claim 7 or 8,
wherein the profile (116) comprises an application program (118) which does not allow the key (216) to be read; and
wherein the application program (118) of the profile (116) is configured to determine the PIN (215) from the key (216) using the cryptographic algorithm in response to reception of the challenge (220).

10. Communication device (210a, 210b) according to one of Claims 7 to 9, having:
a processor (217) which is configured, on the basis of the received profile (116) of the user, to set up a communication channel (615) via a network (600) of a fifth generation, 5G, or of a further generation, to configure a slice (601) of the network (600) of the fifth or further generation and/or to enable an application (611, 621) of the network (600) of the fifth or further generation.

## Revendications

1. Serveur SMDP (110a, 110b), comprenant :
un générateur de profil (111) destiné à générer un profil (112) d'un utilisateur d'un SIM électronique, eSIM ;
un générateur de PIN (113) destiné à générer un numéro d'identification personnel, PIN (114), du SIM électronique ; et
une interface de communication (115) destinée à communiquer le profil avec les informations à propos du PIN (116) à un circuit eSIM (212) d'un appareil de communication (210a, 210b),
**caractérisé en ce que**
le générateur de PIN (113) est conçu pour générer une clé et une mise à l'épreuve selon un procédé de réponse de mise à l'épreuve, de sorte que le PIN (114) puisse être déterminé par le biais d'un algorithme cryptographique à partie de la clé et de la mise à l'épreuve ; et le générateur de profil (111) est configuré pour écrire la clé et l'algorithme cryptographique (135) dans le profil (112) .

2. Serveur SMDP (110a, 110b) selon la revendication 1, le profil (112) de l'utilisateur comprenant une structure de données avec des données (117) et des programmes d'application (118) qui sont mis à disposition de l'utilisateur sur l'eSIM et qui permettent d'accéder à une infrastructure de réseau spécifique.

3. Serveur SMDP (110b) selon la revendication 1 ou 2, comprenant :
une interface de réseau (132) destinée à recevoir des données de description de profil (133) de la part d'un réseau de communication mobile (130) auprès duquel l'utilisateur est enregistré,
le générateur de profil (111) étant configuré pour générer le profil (112) de l'utilisateur en se basant sur les données de description de profil (133).

4. Serveur SMDP (110b) selon la revendication 3, l'interface de réseau (132) étant en outre configurée pour recevoir les données personnelles (134) de l'utilisateur et
le générateur de PIN (113) étant configuré pour générer le PIN (114) du SIM électronique en se basant sur les données personnelles (134) de l'utilisateur reçues.

5. Serveur SMDP (110b) selon l'une des revendications 1 à 4, le profil (112) comprenant un programme d'application (118) qui n'autorise pas une lecture de la clé.

6. Serveur SMDP (110b) selon la revendication 5, le programme d'application du profil (112) étant configuré pour déterminer le PIN (114) à partir de la clé en réaction à une réception de la mise à l'épreuve en utilisant l'algorithme cryptographique.

7. Appareil de communication (210a, 210b), comprenant :
un circuit eSIM (212) destiné à mettre à disposition un SIM électronique, eSIM ;
une interface de communication (211) destinée à recevoir un profil (116) d'un utilisateur de l'eSIM avec des informations à propos d'un numéro d'identification personnel, PIN (215) du SIM électronique ; et
un écran (213) destiné à afficher le PIN (215),
**caractérisé en ce que**
le PIN (215) peut être déterminé par le biais d'un algorithme cryptographique à partir d'une clé (216) et d'une mise à l'épreuve (220) ; et le profil (116) comprend la clé (216) et l'algorithme cryptographique.

8. Appareil de communication (210a, 210b) selon la revendication 7,
le profil (116) de l'utilisateur comprenant une structure de données avec des données (117) et des programmes d'application (118) qui sont mis à disposition de l'utilisateur sur l'eSIM et qui permettent d'accéder à une infrastructure de réseau spécifique.

9. Appareil de communication (210a, 210b) selon la revendication 7 ou 8,
le profil (116) comprenant un programme d'application (118) qui n'autorise pas une lecture de la clé (216) ; et
le programme d'application (118) du profil (116) étant configuré pour déterminer le PIN (215) à partir de la clé (216) en réaction à une réception de la mise à l'épreuve (220) en utilisant l'algorithme cryptographique.

10. Appareil de communication (210a, 210b) selon l'une des revendications 7 à 9, comprenant :
un processeur (217) qui est configuré pour, en se basant sur le profil (116) reçu de l'utilisateur, établir un canal de communication (615) par le biais d'un réseau (600) d'une cinquième génération, 5G, ou d'une génération supplémentaire, configurer une tranche (601) du réseau (600) de la cinquième génération ou de la génération supplémentaire et/ou libérer une application (611, 621) du réseau (600) de la cinquième génération ou de la génération supplémentaire.
